# EUROPÄISCHE PATENTSCHRIFT

(11) **EP 2 165 089 B1**
(45) Veröffentlichungstag und Bekanntmachung des Hinweises auf die Patenterteilung: **11.07.2018**
(21) Anmeldenummer: 08759638.3
(22) Anmeldetag: 15.05.2008
(51) Int. Cl.: F16F 9/46, F16F 9/348

(54) **DÄMPFER**
DAMPER
AMORTISSEUR

(30) Priorität: 04.06.2007 DE 102007025966
(43) Veröffentlichungstag der Anmeldung: 24.03.2010
(73) Patentinhaber: Robert Bosch GmbH, 70442 Stuttgart (DE)
(72) Erfinder: HENNECKE, Thomas, 70771 Leinfelden (DE); BRAUN, Sigmund, 72127 Kusterdingen (DE)
(86) Internationale Anmeldenummer: PCT/EP2008/055979
(87) Internationale Veröffentlichungsnummer: WO 2008/148626

(56) Entgegenhaltungen:
- EP-A- 1 182 374
- DE-A1- 10 163 217
- FR-A- 2 805 872
- US-A1- 2002 189 913
- US-B1- 6 182 805

## Beschreibung

### Stand der Technik

Die Erfindung geht aus von einem Dämpfer nach der Gattung des unabhängigen Patentanspruchs 1.

In konventionellen passiven Stoßdämpferkolben werden in der Regel Federpakete, bestehend aus mehreren Federscheiben zur Erzeugung einer bestimmten Dämpfungskraftkennlinie eingesetzt. Die Federrate des Federpakets im konventionellen Stoßdämpferkolben wird einmalig während der Entwicklung abgestimmt und lässt sich danach nicht mehr verstellen. Dieses Prinzip ermöglicht einen kostengünstigen und robusten Aufbau eines Dämpferkolbens bei gleichzeitig sehr guten und in der Praxis bewährten Verläufen der Dämpferkennlinien.

Zudem sind aus dem Stand der Technik Dämpfer für Fahrzeuge mit verstellbaren Dämpferkolben bekannt, die in der Regel nach dem Prinzip eines variablen Öffnungsquerschnitts arbeiten. Diese Dämpfer stellen die entsprechenden Stoßdämpferkennwerte über hydraulische Proportionalventile ein und können an unterschiedliche Fahrsituationen angepasst werden. Die Proportionalventile steuern beispielsweise mit Hilfe eines Steuerkolbens, der von einer Erregerspule bewegt wird, kontinuierlich den Fluiddurchfluss im Dämpfer. Die Proportionalventile sind entweder an den Dämpfer angeflanscht oder im Kolbenstempel des Dämpfers integriert. Ein zusätzlicher Sensor, der an der Radaufhängung angeordnet ist, liefert Informationen über den Einfahrzustand des Dämpfers. Als Sensoren können Beschleunigungssensoren bzw. Wegsensoren verwendet werden. Zugehörige Auswerte- und Steuergeräte sind entweder zentral im Fahrzeug angeordnet oder können dezentral am angeflanschten Proportionalventil angeordnet sein. Das Proportionalventil kann beispielsweise den Hauptfluiddurchfluss indirekt steuern, d.h. ein kleiner Nebenfluss wird direkt von einem kleinen Steuerkolben reguliert und bildet eine Druckdifferenz zum Hauptventil. Aufgrund dieser regulierten Druckdifferenz stellt sich der Hauptfluiddurchfluss im Hauptventil ein. Dadurch wird erreicht, dass mit relativ geringen Stellkräften ein verhältnismäßig großer Druck gesteuert werden kann. Die Reaktionszeit des Dämpfers ist durch das Einschwingverhalten des Proportionalventils begrenzt.

In der nicht vorveröffentlichten Patentanmeldung DE 10 2006 037 172.0 der Anmelderin wird ein Dämpfer mit einem Dämpferzylinder beschrieben, in welchem ein Kolbenstempel über eine Kolbenstange geführt ist, wobei zur Einstellung von Dämpferkennwerten der Durchfluss eines Dämpferfluids geregelt wird. Innerhalb des Dämpferzylinders sind Regelungsmittel angeordnet, welche zwei unabhängige Regelkreise für eine Zugstufe und eine Druckstufe aufweisen, wobei die Regelungsmittel während der Druckstufenperiode den Durchfluss des Dämpferfluids in einer ersten Durchflussrichtung mit ersten Verstellmitteln regeln und während der Zugstufenperiode den Durchfluss des Dämpferfluids in einer zweiten Durchflussrichtung mit zweiten Verstellmitteln regeln. Eine mögliche Verstellgröße der ersten Verstellmittel für eine nachfolgende Druckstufenperiode ist durch zugehörige erste Vorgabemittel während der zeitlich vor dieser Druckstufeperiode liegenden Zugstufenperiode einstellbar, und eine mögliche Verstellgröße der zweiten Verstellmittel für die nachfolgende Zugstufenperiode ist durch zugehörige zweite Vorgabemittel während der zeitlich vor dieser Zugstufenperiode liegenden Druckstufenperiode einstellbar.

In der US 2002/0189913 A1 wird ein Dämpfer mit einem Dämpferzylinder offenbart, in welchem ein Kolbenstempel über eine Kolbenstange geführt ist. Zur Einstellung von Dämpferkennwerten ist der Durchfluss eines Dämpferfluids über innerhalb des Dämpferzylinders angeordnete Regelungsmittel regelbar, welche den Durchfluss des Dämpferfluids in eine erste Durchflussrichtung mit ersten Verstellmitteln und in eine zweite Durchflussrichtung mit zweiten Verstellmitteln regeln. Die ersten und zweiten Verstellmittel sind jeweils als mindestens ein Federelement ausgeführt, wobei die Federrate von mindestens einem der Federelemente zur Vorgabe eines Dämpfungsverhaltens über korrespondierende Vorgabemittel einstellbar ist.

In der FR 2 805 872 A1 wird Dämpfer mit einem Dämpferzylinder offenbart, in welchem ein Kolbenstempel über eine Kolbenstange geführt ist. Zur Einstellung von Dämpferkennwerten ist der Durchfluss eines Dämpferfluids über innerhalb des Dämpferzylinders angeordnete Regelungsmittel regelbar, welche den Durchfluss des Dämpferfluids in eine erste Durchflussrichtung mit ersten Verstellmitteln und in eine zweite Durchflussrichtung mit zweiten Verstellmitteln regeln. Die ersten und zweiten Verstellmittel sind jeweils als mindestens ein Federelement ausgeführt, wobei die Federrate von mindestens einem der Federelemente zur Vorgabe eines Dämpfungsverhaltens über korrespondierende Vorgabemittel einstellbar ist. Die Vorgabemittel sind jeweils als Schiebelement ausgeführt, dessen Position zur Einstellung der Federrate über dem korrespondierenden mindestens einen Federelement veränderbar ist.

### Offenbarung der Erfindung

Der erfindungsgemäße Dämpfer nach den Merkmalen des unabhängigen Patentanspruchs 1 hat demgegenüber den Vorteil, dass erste und zweite Verstellmittel jeweils als mindestens ein Federelement ausgeführt sind, wobei die Federrate von mindestens einem der Federelemente zur Vorgabe eines Dämpfungsverhaltens über korrespondierende Vorgabemittel einstellbar ist. Das mindestens eine Federelement kann beispielsweise als einzelne Blattfeder und/oder Blattfederpaket und/oder einzelne Federscheibe und/oder Federpaket ausgeführt werden. Hierbei regeln die ersten Verstellmittel den Durchfluss eines Dämpferfluids in eine erste Durchflussrichtung und die zweiten Verstellmittel regeln den Durchfluss in eine zweite Durchflussrichtung. Der erfindungsgemäße Dämpfer ermöglicht unter Beibehaltung des bewährten Blattfederprinzips eines passiven Dämpfers in vorteilhafter Weise durch die Einstellbarkeit der Federrate einer federbelasteten Drosselöffnung des Kolbenstempels eine Vorgabe des Dämpfungsverhaltens. Zudem ermöglicht der erfindungsgemäße Dämpfer in vorteilhafter Weise eine direkte Steuerung des Fluidflusses, die praktisch ohne Verzögerungen und/oder Einschwingzustände erfolgt.

Durch die in den abhängigen Ansprüchen aufgeführten Maßnahmen und Weiterbildungen sind vorteilhafte Verbesserungen des im unabhängigen Patentanspruch angegebenen Dämpfers möglich.

Besonders vorteilhaft ist, dass die Vorgabemittel jeweils im unbelasteten Zustand der korrespondierenden Verstellmittel über mindestens eine entsprechende Antriebseinheit einstellbar sind, die in Abhängigkeit von Signalen von mindestens einer Sensoreinheit ansteuerbar ist, die vorzugsweise als Drucksensoreinheit ausgeführt ist. Im belasteten Zustand der korrespondierenden Verstellmittel sind die Vorgabemittel jeweils durch Selbsthemmung in der eingestellten Position haltbar. Dadurch, dass das Verstellen der Vorgabemittel vom eigentlichen Arbeitshub des Verstellmittels entkoppelt ist und im unbelasteten Zustand erfolgt, und dass die Vorgabemittel während des zugehörigen Arbeitshubs des Verstellmittels durch Selbsthemmung gehalten werden, reichen geringe Stellkräfte aus, so dass beispielsweise Drehmagnete, Schrittmotoren usw. als rotatorische Antriebseinheiten verwendet werden können.

Die Vorgabemittel sind jeweils als Schiebelement ausgeführt, dessen Position zur Einstellung der Federrate über dem korrespondierenden mindestens einen Federelement veränderbar ist. Der entsprechende Arbeitshub des als Federelement ausgeführten Verstellmittels wird durch die Durchflussrichtung repräsentiert, bei der das zugehörige Verstellmittel die Dämpfarbeit verrichtet. Zudem ermöglicht der erfindungsgemäße Dämpfer, eine stufenlose und schnelle Auswahl von Dämpferkennwerten bzw. von Dämpferkennlinien, so dass eine variierende Auswahl der Dämpfercharakteristik von "sehr hart" auf "sehr weich" möglich ist, die in vorteilhafter Weise unabhängig von einander für eine Druckstufenperiode und für eine Zugstufenperiode eingestellt werden können. Wenn die korrespondierenden Verstellmittel als einzelne Federscheiben und/oder als Federscheibenpakete ausgeführt sind, können die jeweils als mehrere Schiebelemente ausgeführten Vorgabemittel zur Einstellung der Federrate ihre Positionen radial über der einzelnen Federscheibe bzw. über dem Federscheibenpaket verändern.

Erfindungsgemäß weist das Schiebelement ein Zahnstangensegment auf, in das ein Zahnradsegment eingreift, das zur Positionsveränderung des Schiebelements von der korrespondierenden Antriebseinheit bewegt wird. Je nach Ausführung der Antriebseinheit kann im stromlosen Zustand für die Zugstufe und die Druckstufe unabhängig eine der beiden Extrempositionen als Rückfallposition vorgegeben werden. Alternativ kann die Antriebseinheit beispielsweise so ausgelegt werden, dass das Schiebeelement im stromlosen Zustand in einer Mittelstellung verharrt und über das Anlegen einer positiven bzw. negativen Spannung in Richtung der beiden Extrempositionen bewegt werden kann. Dadurch lässt sich bei der Montage je nach Zahneingriff zwischen dem Zahnstangensegment des Schiebeelements und dem Zahnradsegment eine Grundeinstellung aus den Dämpferkennlinien vorwählen.

In weiterer Ausgestaltung des erfindungsgemäßen Dämpfers kann die Federrate für eines der beiden Federelemente fest vorgegeben werden und die erforderliche Federrate für das andere der beiden Federelemente kann während des Betriebs ermittelt und durch das korrespondierende Schiebelement variabel eingestellt werden. Dies ermöglicht eine einfachere und kostengünstigere Ausführung des Dämpfers.

In weiterer Ausgestaltung des erfindungsgemäßen Dämpfers können die Strömungskanäle jeweils so ausgelegt werden, dass das korrespondierende Federelement im belasteten Zustand während des Verbiegevorgangs ausgehend von einem Anschlag zuerst einen zylindrischen Bereich mit einer geringen Querschnittszunahme zur Einstellung des Durchflusses des Dämpferfluids überstreicht. Dadurch kann bei geringen Strömungsgeschwindigkeiten durch die geringe Querschnittszunahme innerhalb des zylindrischen Bereichs ein Vordruck aufgebaut werden, der auch bei kleinen Kolbengeschwindigkeiten eine gewünschte Grunddämpfung bewirkt. Zudem können die Strömungskanäle jeweils so ausgelegt werden, dass das korrespondierende Federelement im belasteten Zustand während des Verbiegevorgangs ausgehend vom Anschlag bei höheren Strömungsgeschwindigkeiten eine Steuerkante überschreitet, die den zylindrischen Bereich begrenzt. Durch das Überschreiten der Steuerkante wird ein überproportionaler Strömungsquerschnitt zur Einstellung des Durchflusses des Dämpferfluids freigegeben. Dadurch kann eine degressive Dämpferkennlinie umgesetzt werden.

Im erfindungsgemäßen Dämpfer bestimmt die Auslegung der Federelemente den Dämpfungskraftbereich und die Geometrie der Strömungskanäle, insbesondere die Auslegung der Steuerkante, bestimmt die Kennliniencharakteristik, wobei die Geometrie der Strömungskanäle einfach in einem Gussteil umgesetzt werden kann. Insgesamt lässt sich dadurch eine einfache und kostengünstige Variantenbildung umsetzen. Die erfindungsgemäße Ausführung ermöglicht eine größere Spreizung zwischen harten und weichen Dämpfungskennlinien bei gleicher Baugröße.

Vorteilhafte, nachfolgend beschriebene Ausführungsformen der Erfindung sind in den Zeichnungen dargestellt.

### Kurze Beschreibung der Zeichnungen

Fig. 1 zeigt eine schematische perspektivische Darstellung eines erfindungsgemäßen Dämpfers.
Fig. 2 zeigt eine schematische perspektivische Darstellung eines Kolbens des erfindungsgemäßen Dämpfers gemäß Fig. 1.
Fig. 3 zeigt eine schematische Draufsicht auf den Kolben gemäß Fig. 2.
Fig. 4 zeigt eine schematische Schnittdarstellung eines Kolbenstempels des Kolbens gemäß Fig. 2 und 3.
Fig. 5 zeigt eine schematische perspektivische Darstellung einer Trägereinheit des Kolbenstempels gemäß Fig. 4.
Fig. 6 zeigt eine schematische perspektivische Darstellung einer Verstelleinheit mit der Trägereinheit gemäß Fig. 5.
Fig. 7 bis 10 zeigen jeweils eine schematische Schnittdarstellung des Kolbenstempels zur Beschreibung der Funktionsweise des erfindungsgemäßen Dämpfers.
Fig. 11 zeigt eine schematische perspektivische Darstellung einer anderen Ausführungsform der Trägereinheit mit Verstellmitteln.

### Ausführungsformen der Erfindung

In den Zeichnungen bezeichnen gleiche Bezugszeichen Elemente bzw. Komponenten, welche gleiche bzw. analoge Funktionen ausführen.

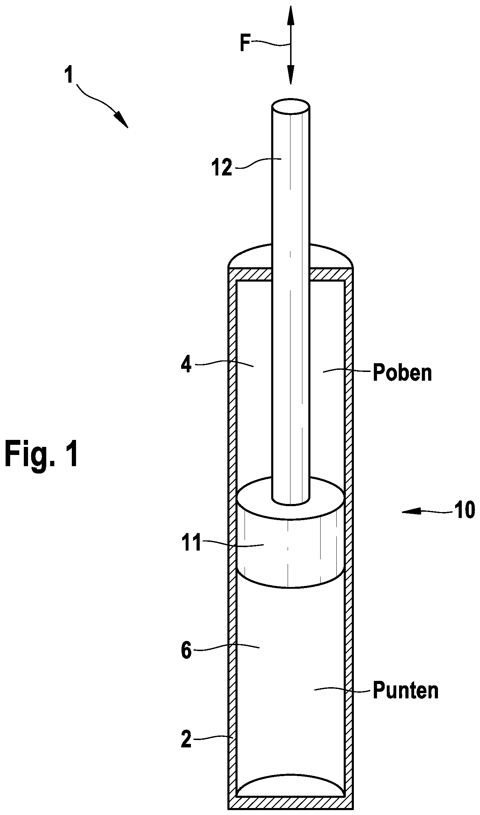

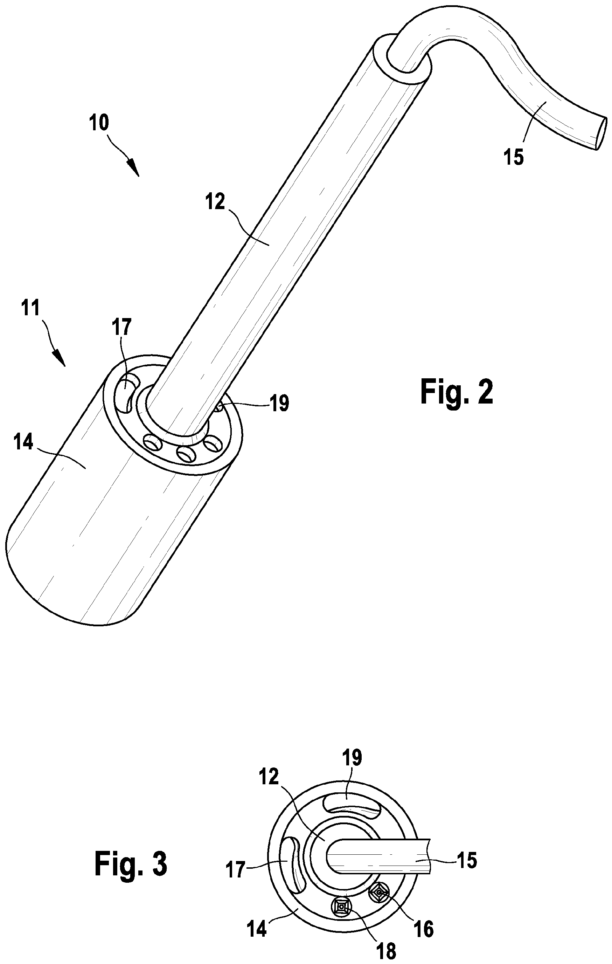

Wie aus Fig. 1 bis 4 ersichtlich ist, umfasst ein erfindungsgemäßer Dämpfer 1, der vorzugsweise als Stoßdämpfer eines Fahrzeugs ausgeführt ist, einen Dämpferzylinder 2, in dem ein Kolben 10 beweglich angeordnet ist, der einen Kolbenstempel 11 und eine Kolbenstange 12 umfasst. Der Kolbenstempel 11 teilt den Dämpferzylinder 2 in eine obere Dämpferkammer 4 und eine untere Dämpferkammer 6. Eine erste Sensoreinheit 16 detektiert beispielsweise den Druck Poben in der oberen Dämpferkammer 4 und eine zweite Sensoreinheit 18 detektiert beispielsweise den Druck Punten in der unteren Dämpferkammer 6. Als Regelgröße für die Regelungsmittel wird eine Kraft F verwendet, die auf den Kolben 10 des Dämpfers 1 wirkt. Mit Hilfe der beiden Sensoreinheiten 16, 18 wird die Kraft F, die auf den Dämpfer 1 und somit auf das Fahrzeug wirkt direkt ermittelt. Die wirkende Kraft F kann direkt aus den beiden von den Sensoreinheiten 16, 18 erfassten Drücken Poben, Punten abgeleitet werden.

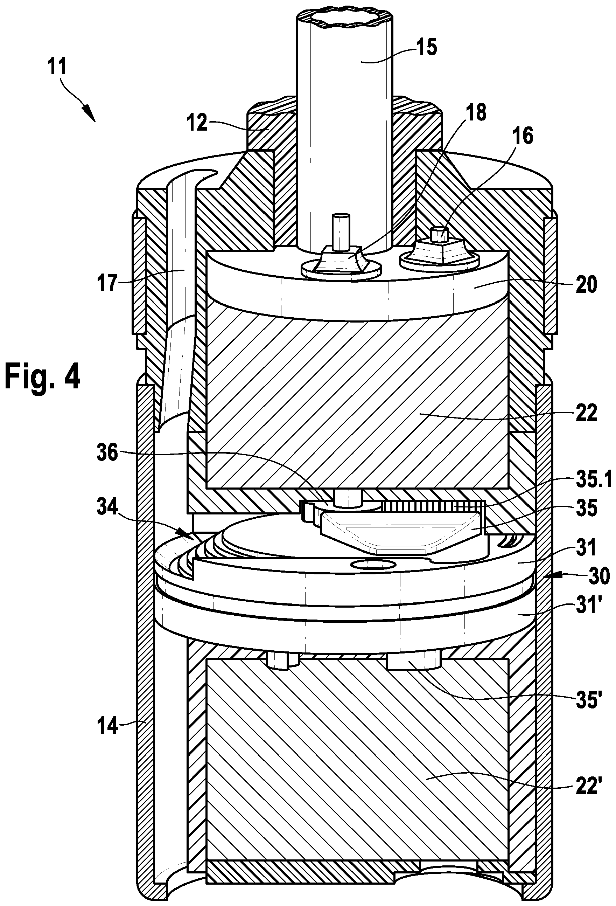

Wie aus Fig. 4 weiter ersichtlich ist, ist der Kolbenstempel 11 als kompakte Einheit ausgeführt, die als Gehäuse ein Stempelrohr 14 umfasst, das beispielsweise als dünnwandiges Stahlrohr ausgeführt ist. Im Stempelrohr 14 sind eine Elektronikeinheit 20, welche die erste und zweite Sensoreinheit 16, 18 und eine Zuleitung 15 umfasst, eine erste und zweite Antriebseinheit 22, 22', die beispielsweise jeweils als Drehmagnet ausgeführt sind, und eine Verstelleinheit 30 angeordnet, welche erste und zweite Verstellmittel 34, 34' und erste und zweite Vorgabemittel 35, 35' umfasst.. Die beiden Sensoreinheiten 16, 18 können beispielsweise als Drucksensoren, Beschleunigungssensoren und/oder Wegesensoren aufgeführt werden, die jeweils eine zugehörige Elektronikschaltung umfassen. Zudem wertet eine nicht dargestellte Auswerte- und Steuereinheit, die Signale der beiden Sensoreinheiten 16, 18 aus und stellt die Vorgabemittel 35, 35' über die korrespondierende Antriebseinheit 22, 22' in Abhängigkeit von der Auswertung der Sensorsignale entsprechend ein, wobei die Vorgabemittel 35, 35' zur Einstellung des Durchflusses eines Dämpferfluids durch einen ersten Regelkanal 17 bzw. durch einen zweiten Regelkanal 19 auf die Verstellmittel 34, 34' einwirken. Die nicht dargestellte Auswerte- und Steuereinheit kann ebenfalls innerhalb des Kolbenstempels 11 angeordnet werden und beispielsweise als Teil der Elektronikeinheit 20 ausgeführt werden. Alternativ kann die Auswerte- und Steuereinheit außerhalb des Dämpfers 1 in einem Steuergerät angeordnet werden. Die elektrische Versorgung bzw. die Signalübertragung für die Sensoreinheiten 16, 18 bzw. für die nicht dargestellte Steuer- und Auswerteeinheit erfolgt über die Zuleitung 15, die durch ein entsprechende Bohrung in der Kolbenstange 12 zum Kolbenstempel 11 geführt wird.

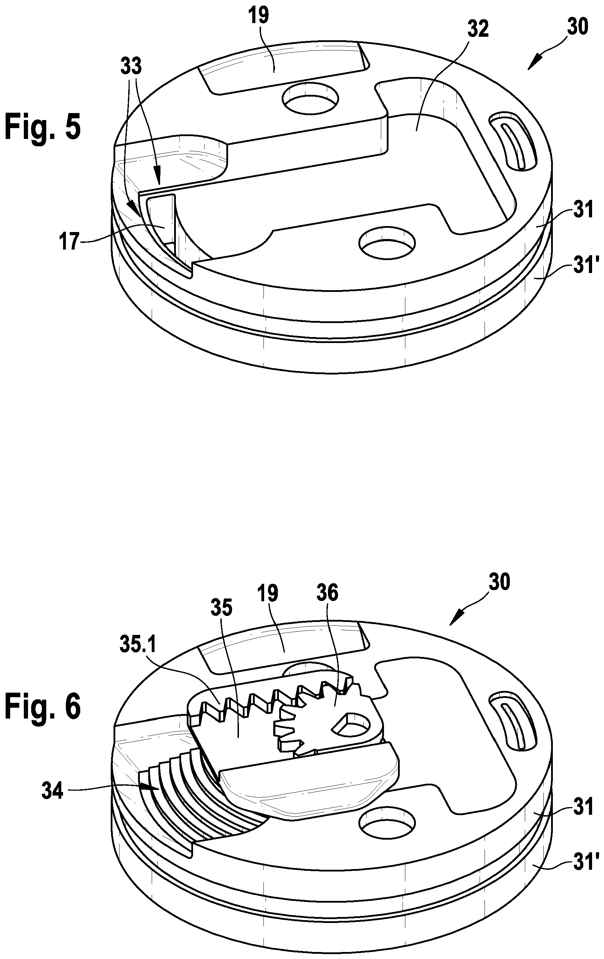

Die innerhalb des Dämpferzylinders 2 im Kolbenstempel 11 angeordneten Regelungsmittel umfassen zwei unabhängige Regelkreise für eine Zugstufe und eine Druckstufe. Zur Regelung des Durchflusses des Dämpferfluids durch den ersten Regelkanal 17 in einer ersten Durchflussrichtung während der Druckstufenperiode umfassen die Regelungsmittel die erste Antriebseinheit 22, die ersten Vorgabemittel 35 und die ersten Verstellmittel 34, die nachfolgend unter Bezugnahme auf Fig. 5 bis 10 im Detail beschrieben werden. Zur Regelung des Durchflusses des Dämpferfluids durch den zweiten Regelkanal 19 in einer zweiten Durchflussrichtung während der Zugstufenperiode umfassen die Regelungsmittel die zweite Antriebseinheit 22', die zweiten Vorgabemittel 35' und die zweiten Verstellmittel 34', die nachfolgend ebenfalls unter Bezugnahme auf Fig. 5 bis 10 im Detail beschrieben werden.

Wie aus Fig. 5 und 6 ersichtlich ist, weist die Verstelleinheit 30 eine obere Trägereinheit 31 und eine untere Trägereinheit 31' auf, die identisch aufgebaut sind. Die obere Trägereinheit 31 weist einen Lagerbereich 32 auf, in den ein erstes als Blattfederpaket 34 ausgeführtes Federelement zur Regelung des Durchflusses durch den ersten Regelkanal 17 eingelegt ist. Zudem weist die obere Trägereinheit 31 im Bereich des ersten Regelkanals 17 eine Steuerkante 33 zur Vorgabe einer Dämpfungskennliniencharakteristik auf. Analog weist die untere Trägereinheit 31 einen Lagerbereich auf, in den ein zweites als Blattfederpaket 34' ausgeführtes Federelement zur Regelung des Durchflusses durch den zweiten Regelkanal 19 eingelegt ist. Zudem weist die untere Trägereinheit 31' im Bereich des zweiten Regelkanals 19 eine Steuerkante zur Vorgabe einer Dämpfungskennliniencharakteristik auf. Da der zweite Regelkanal 19 im Bezug auf den ersten Regelkanal 17 um 90 Grad verdreht angeordnet ist, ist auch die Ausrichtung des zweiten Blattfederpakets 34' zum ersten Blattfederpaket 34 um 90 Grad verdreht. Wie aus Fig. 6 weiter ersichtlich ist, ist über dem ersten Blattfederpaket 34 ein als Schiebelement 35 ausgeführtes Vorgabemittel angeordnet, dessen Position zur Einstellung der Federrate über dem korrespondierenden ersten Blattfederpaket 34 veränderbar ist. Zum Verschieben weist das erste Schiebelement 35 ein Zahnstangensegment 35.1 auf, in das ein Zahnradsegment 36 eingreift, das zur Positionsveränderung des ersten Schiebelements 35 von der korrespondierenden ersten Antriebseinheit 22 entsprechend gedreht wird. Analog ist über dem zweiten Blattfederpaket 34' ein als Schiebelement 35' ausgeführtes Vorgabemittel angeordnet, wobei dieses zweite Schiebelement 35' zur Positionsveränderung des zweiten Schiebelements 35' von der korrespondierenden zweiten Antriebseinheit 22' entsprechend gedreht wird.

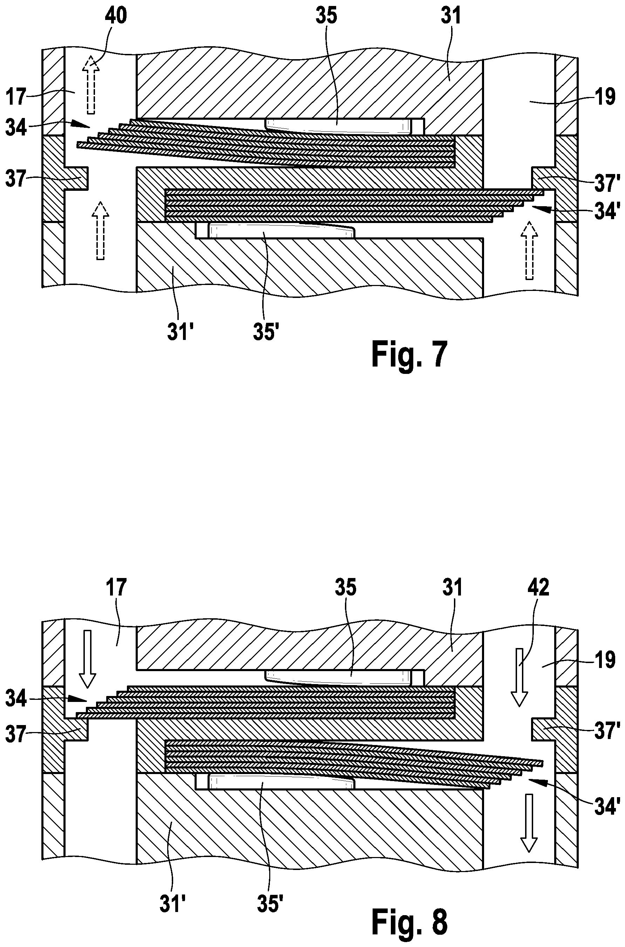

Nachfolgend wird unter Bezugnahme auf Fig. 7 bis 10 die Funktionsweise des erfindungsgemäßen Dämpfers 1 beschrieben, wobei aus Gründen einer einfacheren Beschreibung der zweite Regelkanal 19 im Bezug auf den ersten Regelkanal 17 und das zweite Blattfederpakets 34' zum ersten Blattfederpaket 34 um 180 Grad verdreht dargestellt sind.

Wie aus Fig. 7 ersichtlich ist, fließt während einer Druckstufenperiode im ersten Regelkanal 17 ein Dämpferfluid in die erste Durchflussrichtung 40, die auch als Druckrichtung bezeichnet wird. Das durchströmende Dämpferfluid öffnet bzw. verbiegt das erste Blattfederpaket 34. Die Verbiegung des ersten Blattfederpakets 34 und damit der Öffnungswinkel bzw. der Öffnungsquerschnitt werden durch den über das erste Schiebeelement 35 eingestellten Federgrad des Blattfederpakets 34 vorgegeben. Somit beeinflusst das erste Blattfederpaket 34 während der Druckstufenperiode den Durchflussquerschnitt des Dämpferfluids im ersten Regelkanal 17, das in die Druckrichtung 40 fließt, und gibt somit die Dämpfungskraft für die Druckstufe vor. Wie weiter aus Fig. 7 ersichtlich ist, wird das zweite Blattfederpaket 34' während der Druckstufenperiode durch das im zweiten Regelkanal 19 in die Druckrichtung 40 fließende Fluid gegen einen zweiten Anschlag 37' gedrückt.

Wie aus Fig. 8 ersichtlich ist, fließt während der Zugstufenperiode der Fluidfluss im ersten Regelkanal 17 in die zweite Durchflussrichtung 42, die auch als Zugrichtung bezeichnet wird. Durch den Fluidfluss in die zweite Durchflussrichtung 42 wird das erste Blattfederpaket 34 geschlossen, d.h. das erste Blattfederpaket 34 liegt an einem ersten Anschlag 37 an. Der eigentliche Fluidfluss in die zweite Durchflussrichtung 42 erfolgt im zweiten Regelkanal 19, der analog zur obigen Beschreibung durch das zweite Blattfederpaket 34' geregelt wird. In diesem unbelasteten Zustand des ersten Blattfederpakets 34 kann das erste Schiebelement 35 mit Hilfe der als Drehmagnet ausgeführten ersten Antriebseinheit 22 mit einer geringen Stellkraft in eine andere gewünschte Position gebracht werden.

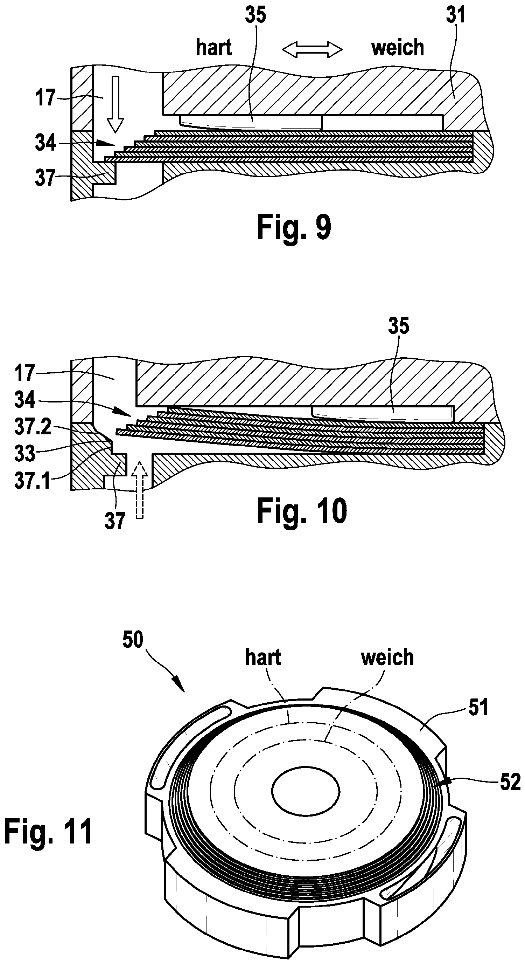

Wie aus Fig. 9 ersichtlich ist, kann das erste Schiebelement 35 im unbelasteten Zustand des ersten Blattfederpakets 34 mit Hilfe der als Drehmagnet ausgeführten ersten Antriebseinheit 22 mit einer geringen Stellkraft in eine andere gewünschte Position gebracht werden, wodurch der Federgrad des ersten Blattfederpakets 34 zwischen den Extremzuständen "weiche" Dämpfungskennlinie und "harte" Dämpfungskennlinie kontinuierlich eingestellt werden kann, wobei das Schiebelement 35 als Gegenlager für das erste Blattfederpaket 34 wirkt. Die erste Antriebseinheit 22 ist beispielsweise so ausgelegt, dass das erste Schiebeelement 35 in einem stromlosen Zustand in einer Mittelstellung zwischen den beiden Extermstellungen "hart" und "weich" verharrt und über das Anlegen einer positiven bzw. negativen Spannung in Richtung der beiden Extrempositionen bewegt werden kann. In dem in Fig. 7 dargestellten belasteten Zustand wird das erste Schiebelement 35 während der Druckstufenperiode durch Selbsthemmung, d.h. durch das verbogene erste Blattfederpaket 34 ohne Gegenkraft in seiner eingestellten Position gehalten. Bei alternativen nicht dargestellten Ausführungsformen der Erfindung kann im stromlosen Zustand je nach Ausführung der Antriebseinheit eine der beiden Extrempositionen als Rückfallposition vorgegeben werden.

Analog kann das zweite Schiebeelement 35' im unbelasteten Zustand des zweiten Blattfederpakets 34', d.h. während der Druckstufenperiode, mit Hilfe der als Drehmagnet ausgeführten zweiten Antriebseinheit 22' mit einer geringen Stellkraft in eine andere gewünschte Position gebracht werden, wodurch der Federgrad des zweiten Blattfederpakets 34' ebenfalls zwischen den Extremzuständen "weiche" Dämpfungskennlinie und "harte" Dämpfungskennlinie kontinuierlich eingestellt werden kann, wobei das Schiebelement 35' als Gegenlager für das zweite Blattfederpaket 34' wirkt.

Die Position des ersten bzw. zweiten Schiebeelements 35, 35' wird durch Auswerten der Signale der ersten und zweiten Sensoreinheit 16, 18 ermittelt. Über die erste und zweite Sensoreinheit 16, 18 wird die jeweilige aktuelle Dämpfungskraft ermittelt. Der ermittelte Druckwert bzw. die Dämpfungskraft wird mit einem gewünschten Druckwert bzw. einer gewünschten Dämpfungskraft verglichen. Anschließend wird über die entsprechende Ansteuerung der jeweiligen Antriebseinheit 22, 22' die Position des korrespondierenden Schiebeelements 35, 35' verändert, sobald das betroffene Schiebeelement 35, 35' beim nächsten Richtungswechsel des Fluiddurchflusses nicht mehr belastet ist. Für die nächste Periode befindet sich das zugehörige Schiebelement 35, 35' jetzt in der neuen Position und gibt die gewünschte neue Dämpfungscharakteristik über den eingestellten Federgrad des korrespondierenden Blattfederpakets 34, 34' vor. Durch die beschriebene mechanische Trennung von Zugstufenperiode und Druckstufenperiode kann eine eindeutige und unabhängige Regelung für die beiden Dämpfungskräfte über die Regelung des Durchflusses des Dämpferfluids durch den ersten Regelkanal 17 bzw. den zweiten Regelkanal 19 erreicht werden. Die Verstellung der Schiebeelemente 35, 35' zur Einstellung der zugehörigen Federgrade der Blattfederpakete 34, 34' für die Zug- bzw. Druckstufeperiode erfolgt in vorteilhafter Weise immer während des jeweiligen unbelasteten Zustands des Schiebelementes 35, 35'.

Die Dämpfungskennliniencharakteristik kann durch die Geometrie des korrespondierenden Strömungskanals bzw. Regelkanals 17, 19 vorgegebenen werden. Wie aus Fig. 10 ersichtlich ist, kann der Strömungskanal 17 bzw. 19 so ausgelegt werden, dass das korrespondierende Blattfederpaket, hier das erste Blattfederpaket 34, während des Verbiegevorgangs zuerst einen zylindrischen Bereich 37.1 mit einer geringen Querschnittszunahme überstreicht, wobei erst oberhalb einer zu bestimmenden Steuerkante 33 der Strömungsquerschnitt überproportional zunimmt. Daher bewegt sich das korrespondierende Blattfederpakete 34 im belasteten Zustand ausgehend vom Anschlag 37 bei geringen Strömungsgeschwindigkeiten nur innerhalb des zylindrischen Bereichs 37.1, um eine geringe Querschnittszunahme zur Einstellung des Durchflusses des Dämpferfluids zu bewirken, wodurch sich ein bestimmter Vordruck aufbauen kann, der eine gewünschte Grunddämpfung auch bei kleinen Kolbengeschwindigkeiten bewirkt. Bei höheren Kolbengeschwindigkeiten überschreitet das Blattfederpaket 34 die Steuerkante 33 und gibt einen überproportionalen Strömungsquerschnitt 37.2 frei. Dadurch ist in vorteilhafter Weise eine gewünschte degressive Dämpferkennlinie erreichbar. Durch die Auslegung der Blattfederpakete kann der korrespondierende Dämpfungskraftbereich bestimmt werden, wodurch sich eine einfache Variantenbildung umsetzen lässt.

Bei einer alternativen nicht dargestellten Ausführungsform des erfindungsgemäßen Dämpfers kann der Federgrad für eines der beiden Blattfederpakete 34, 34' fest vorgegeben werden und die erforderliche Verstellgröße für das andere der beiden Blattfederpakete 34, 34' kann während des Betriebs ermittelt und durch das korrespondierende Schiebeelement 35, 35' variabel eingestellt werden. So kann beispielsweise der Dämpferfluidfluss im ersten Regelkanal 17 durch eine Vorgabe eines konstanten Federgrads für das zugehörige erste Blattfederpaket 34 reguliert werden. Dadurch kann in vorteilhafter Weise auf die erste Antriebseinheit 22 und das erste Schiebeelement 35 verzichtet werden. Der Dämpferfluidfluss im zweiten Regelkanals 19 ist jedoch variabel ausgeführt und kann, wie oben ausgeführt ist, über das zweite Blattfederpaket 34' durch das einstellbare zweite Schiebeelement 35' variiert werden. Analog kann der Dämpferfluidfluss im zweiten Regelkanal 19 durch eine Vorgabe einer konstanten Verstellgröße für das zugehörige zweite Blattfederpaket 34' reguliert werden.

Wie aus Fig. 11 ersichtlich ist, weist eine alternative Ausführungsform einer Verstelleinheit 50 eine Trägereinheit 51 auf, in der ein Federscheibenpaket 52 zur Regelung des Durchflusses durch einen Regelkanal eingelegt ist. Über dem dargestellten Federscheibenpaket 52 sind nicht dargestellte Schiebelemente angeordnet, deren Positionen zur Vorgabe eines Federgrades radial über dem Federscheibenpaket 52 veränderbar sind, wobei der Federgrad des Federscheibenpakets 52 von innen nach außen zwischen den Extremzuständen "weiche" Dämpfungskennlinie und "harte" Dämpfungskennlinie kontinuierlich eingestellt werden kann.

Die Ausführungsformen des erfindungsgemäßen Dämpfers ermöglichen in vorteilhafter Weise, dass für unterschiedliche Fahrsituationen immer die jeweils optimale Einstellung der Dämpferkennwerte möglich ist. Im Gegensatz zu einem herkömmlichen hydraulischen Proportionalventil ermöglichen die erfindungsgemäßen Federelemente eine direkte Regelung des Hauptfluidflusses praktisch ohne Verzögerungen und Einschwingzustände, wobei die Regelung durch die Entkopplung des Verstellvorgangs vom eigentlichen Arbeitshub in vorteilhafter Weise mit geringen Stellkräfte ausgeführt werden kann. Durch die mögliche sehr kompakte Ausführungsform eignet sich der erfindungsgemäße Dämpfer auch zur Dämpfung von Fahrzeugkabinen von Nutzfahrzeugen, zur Dämpfung von Fahrzeugsitzen, Aufliegern usw. Zudem eignet sich der erfindungsgemäße Dämpfer auch für Anwendungen außerhalb der Fahrzeugtechnik, beispielsweise im Maschinenbau, die einen regelbaren Dämpfer mit kompakter Bauform erfordern.

## Patentansprüche

1. Dämpfer mit einem Dämpferzylinder (2), in welchem ein Kolbenstempel (11) über eine Kolbenstange (12) geführt ist, wobei zur Einstellung von Dämpferkennwerten der Durchfluss eines Dämpferfluids über innerhalb des Dämpferzylinders (2) angeordnete Regelungsmittel regelbar ist, wobei die Regelungsmittel den Durchfluss des Dämpferfluids in eine erste Durchflussrichtung (40) mit ersten Verstellmitteln (34) und in eine zweite Durchflussrichtung (42) mit zweiten Verstellmitteln (34') regeln, wobei die ersten und zweiten Verstellmittel jeweils als mindestens ein Federelement (34, 34', 51) ausgeführt sind, wobei die Federrate von mindestens einem der Federelemente (34, 34', 51) zur Vorgabe eines Dämpfungsverhaltens über korrespondierende Vorgabemittel (35, 35') einstellbar ist, und wobei die Vorgabemittel jeweils als Schiebelement (35, 35') ausgeführt sind, dessen Position zur Einstellung der Federrate über dem korrespondierenden mindestens einen Federelement (34, 34') veränderbar ist, **dadurch gekennzeichnet, dass** das Schiebelement (35, 35') ein Zahnstangensegment (35.1) aufweist, in das ein Zahnradsegment (36) eingreift, das zur Positionsveränderung des Schiebeelements (35, 35') von einer korrespondierenden Antriebseinheit (22, 22') bewegbar ist.

2. Dämpfer nach Anspruch 1, **dadurch gekennzeichnet, dass** das mindestens eine Federelement als einzelne Blattfeder und/oder als Blattfederpaket (34, 34') und/oder als einzelne Federscheibe und/oder als Federscheibenpaket (51) ausgeführt ist.

3. Dämpfer nach Anspruch 1 oder 2, **dadurch gekennzeichnet, dass** die Vorgabemittel (35, 35') jeweils im unbelasteten Zustand der korrespondierenden Verstellmittel (34, 34') über mindestens eine entsprechende Antriebseinheit (22, 22') einstellbar sind, die in Abhängigkeit von Signalen von mindestens einer Sensoreinheit (16, 18) ansteuerbar ist, die vorzugsweise als Drucksensoreinheiten ausgeführt ist.

4. Dämpfer nach einem der Ansprüche 1 bis 3, **dadurch gekennzeichnet, dass** die Vorgabemittel (35, 35') jeweils im belasteten Zustand der korrespondierenden Verstellmittel (34, 34') durch Selbsthemmung in Position haltbar sind.

5. Dämpfer nach einem der Ansprüche 1 bis 4, **dadurch gekennzeichnet, dass** die Vorgabemittel jeweils als mehrere Schiebelemente ausgeführt sind, deren Positionen zur Einstellung der Federrate radial über dem korrespondierenden als Federscheibe und/oder Federscheibenpaket (51) ausgeführten mindestens einen Federelement veränderbar sind.

6. Dämpfer nach einem der Ansprüche 1 bis 5, **dadurch gekennzeichnet, dass** die Antriebseinheit (22, 22') so ausgelegt ist, dass das Schiebeelement (35, 35') in einem stromlosen Zustand als Rückfallstellung in eine der beiden Extrempositionen bewegbar ist.

7. Dämpfer nach einem der Ansprüche 1 bis 5, **dadurch gekennzeichnet, dass** die Antriebseinheit (22, 22') so ausgelegt ist, dass das Schiebeelement (35, 35') in einem stromlosen Zustand in einer Mittelstellung verharrt und über das Anlegen einer positiven bzw. negativen Spannung in Richtung der beiden Extrempositionen bewegbar ist.

8. Dämpfer nach einem der Ansprüche 1 bis 7, **dadurch gekennzeichnet, dass** die Federrate für eines der beiden Federelemente (34, 34') fest vorgegeben ist und die erforderliche Federrate für das andere der beiden Federelemente (34', 34) während des Betriebs ermittelbar ist und durch das korrespondierende Schiebelement (35, 35') variabel einstellbar ist.

9. Dämpfer nach einem der Ansprüche 1 bis 8, **dadurch gekennzeichnet, dass** die Federelemente (34, 34') im belasteten Zustand ausgehend von einem Anschlag (37) bei geringen Strömungsgeschwindigkeiten nur innerhalb eines zylindrischen Bereichs (37.1) bewegbar sind, um eine geringe Querschnittszunahme zur Einstellung des Durchflusses des Dämpferfluids zu bewirken.

10. Dämpfer nach einem der Ansprüche 1 bis 9, **dadurch gekennzeichnet, dass** die Federelemente (34, 34') im belasteten Zustand ausgehend von einem Anschlag (37) bei höheren Strömungsgeschwindigkeiten so bewegt werden, dass eine Steuerkante (33) überschritten wird, die den zylindrischen Bereich (37.1) begrenzt, um einen überproportionalen Strömungsquerschnitt (37.2) zur Einstellung des Durchflusses des Dämpferfluids freizugeben.

## Claims

1. Damper with a damper cylinder (2), in which a piston ram (11) is guided via a piston rod (12), wherein, for the purpose of adjusting characteristic damper values, the throughflow of a damper fluid can be regulated via regulating means arranged within the damper cylinder (2), wherein the regulating means use first adjustment means (34) to regulate the throughflow of the damper fluid in a first throughflow direction (40) and use second adjustment means (34') to regulate said throughflow in a second throughflow direction (42), wherein the first and second adjustment means are each designed in the form of at least one spring element (34, 34', 51), wherein it is possible to adjust the spring rate of at least one of the spring elements (34, 34', 51) in order to predefine a damping behaviour via corresponding predefining means (35, 35'), and wherein the predefining means are each designed in the form of a sliding element (35, 35'), it being possible to alter the position thereof above the corresponding at least one spring element (34, 34') in order to adjust the spring rate, **characterized in that** the sliding element (35, 35') has a rack segment (35.1), in which engages a gearwheel segment (36), which can be moved by a corresponding drive unit (22, 22') in order to alter the position of the sliding element (35, 35').

2. Damper according to Claim 1, **characterized in that** the at least one spring element is designed in the form of an individual leaf spring and/or in the form of a leaf-spring assembly (34, 34') and/or in the form of an individual spring disc and/or in the form of a spring-disc assembly (51).

3. Damper according to Claim 1 or 2, **characterized in that** the predefining means (35, 35'), in each case with the corresponding adjustment means (34, 34') in the unloaded state, can be adjusted via at least one corresponding drive unit (22, 22') which can be activated in dependence on signals from at least one sensor unit (16, 18) designed preferably in the form of pressure-sensor units.

4. Damper according to one of Claims 1 to 3, **characterized in that** the predefining means (35, 35'), in each case with the corresponding adjustment means (34, 34') in the loaded state, can be retained in position by self-locking.

5. Damper according to one of Claims 1 to 4, **characterized in that** the predefining means are each designed in the form of a plurality of sliding elements, it being possible to alter the positions thereof radially above the corresponding at least one spring element designed in the form of a spring disc, and/or spring-disc assembly (51), in order to adjust the spring rate.

6. Damper according to one of Claims 1 to 5, **characterized in that** the drive unit (22, 22') is configured such that the sliding element (35, 35'), in a currentless state, can be moved into one of the two extreme positions as a fallback position.

7. Damper according to one of Claims 1 to 5, **characterized in that** the drive unit (22, 22') is configured such that the sliding element (35, 35'), in a currentless state, remains in a central position and can be moved in the direction of the two extreme positions by a positive or negative voltage being applied.

8. Damper according to one of Claims 1 to 7, **characterized in that** the spring rate for one of the two spring elements (34, 34') is specifically predefined and the necessary spring rate for the other of the two spring elements (34', 34) can be ascertained during operation and adjusted in a variable manner by the corresponding sliding element (35, 35').

9. Damper according to one of Claims 1 to 8, **characterized in that** the spring elements (34, 34') in the loaded state, starting from a stop (37), can be moved at low flow speeds only within a cylindrical region (37.1), so as to effect a small increase in cross section in order to adjust the throughflow of the damper fluid.

10. Damper according to one of Claims 1 to 9, **characterized in that** the spring elements (34, 34') in the loaded state, starting from a stop (37), are moved at higher flow speeds such that a control edge (33) which bounds the cylindrical region (37.1) is exceeded, so as to free a disproportionate flow cross section (37.2) in order to adjust the throughflow of the damper fluid.

## Revendications

1. Amortisseur comprenant un cylindre d'amortisseur (2), dans lequel une tête de piston (11) est guidée par l'intermédiaire d'une tige de piston (12), pour le réglage de valeurs caractéristiques pour l'amortisseur, le débit d'un fluide amortisseur étant régulable par l'intermédiaire de moyens régulateurs placés à l'intérieur du cylindre d'amortisseur (2), les moyens régulateurs régulant le débit du fluide amortisseur dans une première direction de débit (40) à l'aide de premiers moyens d'ajustage (34) et dans une deuxième direction de débit (42) à l'aide de deuxièmes moyens d'ajustage (34'), les premiers et deuxièmes moyens d'ajustage étant réalisés chacun sous la forme d'au moins un élément à ressort (34, 34', 51), à des fins de prédéfinition d'un comportement en amortissement, la raideur d'au moins un des éléments à ressort (34, 34', 51) étant réglable par l'intermédiaire de moyens de prédéfinition (35, 35') correspondants et les moyens de prédéfinition étant réalisés chacun sous la forme d'un élément coulissant (35, 35') dont la position est variable par l'intermédiaire de l'au moins un élément à ressort (34, 34') correspondant pour le réglage de la raideur, **caractérisé en ce que** l'élément coulissant (35, 35') comprend un segment à crémaillère (35.1) dans lequel s'engrène un segment de roue dentée (36), qui pour faire varier la position de l'élément coulissant (35, 35') est déplaçable par une unité d'entraînement (22, 22') correspondante.

2. Amortisseur selon la revendication 1, **caractérisé en ce que** l'au moins un élément à ressort est réalisé sous la forme d'un ressort à lame individuel et/ou sous la forme d'un paquet de ressorts à lames (34, 34') et/ou sous la forme d'une rondelle élastique individuelle et/ou sous la forme d'un paquet de rondelles élastiques (51).

3. Amortisseur selon la revendication 1 ou 2, **caractérisé en ce que**, chaque fois dans l'état non contraint des moyens d'ajustage (34, 34') correspondants, les moyens de prédéfinition (35, 35') sont réglables par l'intermédiaire d'au moins une unité d'entraînement (22, 22') correspondante, qui est amorçable en fonction de signaux provenant d'au moins une unité de capteur (16, 18) qui est réalisée de préférence sous la forme d'unités de capteurs de pression.

4. Amortisseur selon l'une quelconque des revendications 1 à 3, **caractérisé en ce que** chaque fois dans l'état contraint des moyens d'ajustage (34, 34') correspondants, les moyens de prédéfinition (35, 35') peuvent être maintenus en position par autoblocage.

5. Amortisseur selon l'une quelconque des revendications 1 à 4, **caractérisé en ce que** les moyens de prédéfinition sont réalisés chacun sous la forme de plusieurs éléments coulissants, dont les positions, pour le réglage de la raideur sont variables en direction radiale par l'intermédiaire de l'au moins un élément à ressort correspondant, réalisé sous la forme d'une rondelle élastique et/ou d'un paquet de rondelles élastiques (51).

6. Amortisseur selon l'une quelconque des revendications 1 à 5, **caractérisé en ce que** l'unité d'entraînement (22, 22') est conçue de telle sorte que lorsqu'il n'est pas alimenté en courant, l'élément coulissant (35, 35') soit déplaçable en tant que position de retour dans l'une des deux positions extrêmes.

7. Amortisseur selon l'une quelconque des revendications 1 à 5, **caractérisé en ce que** l'unité d'entraînement (22, 22') est conçue de telle sorte que lorsqu'il n'est pas alimenté en courant, l'élément coulissant (35, 35') demeure dans une position centrale et par l'application d'une tension positive ou négative, soit mobile dans la direction des deux positions extrêmes.

8. Amortisseur selon l'une quelconque des revendications 1 à 7, **caractérisé en ce que** la raideur pour l'un des deux éléments à ressort (34, 34') est fixement prédéfinie et la raideur requise pour l'autre des deux éléments à ressort (34', 34) peut être déterminée pendant le fonctionnement et peut être réglée de manière variable par l'élément coulissant (35, 35') correspondant.

9. Amortisseur selon l'une quelconque des revendications 1 à 8, **caractérisé en ce qu'**à de faibles vitesses de circulation, dans l'état contraint, à partir d'une butée (37), les éléments à ressort (34, 34') ne sont déplaçables, qu'à l'intérieur d'une zone cylindrique (37.1), pour provoquer une faible augmentation de la section transversale pour le réglage du débit du fluide amortisseur.

10. Amortisseur selon l'une quelconque des revendications 1 à 9, **caractérisé en ce qu'**à des vitesses de circulation élevées, dans l'état contraint, à partir d'une butée (37), les éléments à ressort (34, 34') sont déplacés de sorte qu'une arête de commande (33) qui délimite la zone cylindrique (37.1) soit dépassée, pour libérer une section transversale de circulation (37.2) sur-proportionnée, pour le réglage du débit du fluide amortisseur.
